(19) Europäisches Patentamt
European Patent Office
Office européen des brevets

(11) **EP 2 348 891 B1**

(12) **EUROPEAN PATENT SPECIFICATION**

(45) Date of publication and mention
of the grant of the patent:
**21.10.2015  Bulletin 2015/43**

(51) Int Cl.:
**A23L 1/305** *(2006.01)*    **A23L 1/38** *(2006.01)*
**A23G 3/36** *(2006.01)*

(21) Application number: **09792485.6**

(22) Date of filing: **11.09.2009**

(86) International application number:
**PCT/US2009/056736**

(87) International publication number:
**WO 2010/030944 (18.03.2010 Gazette 2010/11)**

(54) **FUNCTIONAL FOOD PASTE**

»FUNCTIONAL FOOD -PASTE

PÂTE ALIMENTAIRE FONCTIONNELLE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **12.09.2008  US 96618 P
06.03.2009  US 158253 P**

(43) Date of publication of application:
**03.08.2011   Bulletin 2011/31**

(73) Proprietor: **Solae, LLC
St. Louis, MO 63110 (US)**

(72) Inventors:
• **SMITH, William C.
Cahokia, Illinois 62206 (US)**
• **BROWN, John A.
Festus, Missouri 63028 (US)**
• **HOLT, Spencer Kent
O'Fallon, Illinois 62269 (US)**

(74) Representative: **D Young & Co LLP
120 Holborn
London EC1N 2DY (GB)**

(56) References cited:
WO-A2-01/78523       US-A- 3 950 545
US-A- 4 018 901      US-A- 4 152 462
US-A1- 2005 181 019  US-A1- 2007 104 853
US-B2- 6 716 462     US-B2- 6 726 943

**Description**

FIELD OF THE INVENTION

The present invention generally relates to food compositions that can be provided in a ready-to-eat form or incorporated into a bar, chew, paste, or filling. The food compositions of the invention have a water activity of less than about 0.85 water activity ($a_w$).

BACKGROUND OF THE INVENTION

Various nutritional supplements can be used to feed or nourish undernourished patients (e.g. moderate or severe acute malnutrition). Historically, these patients were nourished with powdered foods which were dissolved in water before consumption. These foods have been prepared from powdered milk products mixed with carbohydrates, vitamins, minerals and lipids. However, these products can be difficult to feed because they are prepared by diluting in water and can require heating. Further, the water used for diluting can be a source of bacterial contamination or can be otherwise contaminated and may cause additional health problems for the patients. The risk of incorrect feeding and contamination is eliminated by use of food products that are ready-to-use.

One approach to overcoming these disadvantages is the use of a ready-to-use food product that does not require additional preparation. These food products must be shelf stable, have the required nutrient density, and be easily consumed and utilized by malnourished patients.

There is also a need for a functional food paste that can be used in a variety of food products and is capable of preventing water migration in such food products.

Typically, a functional food paste can be shaped, extruded, ground, or heated in the process of making a food product. Frequently the functional food paste looses its shape and slumps, bulges, oozes, or the fat separates during processing and/or storage.

Patent documents US 6 726 943 B2, US 6 716 462 B2, US 2007/104853 A1 and US 4 152 462 A disclose Ready-To-Eat compositions comprising fat and proteins.

SUMMARY OF THE INVENTION

The present invention is directed to a food composition according to claim 1.

The food composition described herein can further comprise at least about 3 wt.% humectant based on the total weight of the composition.

Any of the food compositions described herein can contain a dairy protein, a wheat protein, a canola protein, a corn protein, a lupin protein, an oat protein, a pea protein, a rice protein, a sorghum protein, an amaranth protein, an arrowroot protein, a barley protein, a buckwheat protein, a cassava protein, a channa protein, a millet protein, a peanut protein, a potato protein, a rye protein, a sunflower protein, a tapioca protein, a triticale protein, a whey protein, an egg protein, a soy protein, a white kidney bean protein, a bamboo extract protein, a meat protein, a fish protein, or a combination thereof. Any of the food compositions described herein comprises a soy protein.

Further, any of the food compositions described herein can have from about 10 wt.% to about 40 wt.% fat based on the total weight of the composition. Preferably, these food compositions can have from about 20 wt.% to about 35 wt.% fat based on the total weight of the composition. Further any of these food compositions can contain palm oil, coconut oil, rapeseed oil, sunflower oil, peanut oil, cottonseed oil, palm kernel oil, olive oil, corn oil, hazelnut oil, linseed oil, rice bran oil, sesame oil, safflower oil, canola oil, flax seed oil, soybean oil, blubber, cod liver oil, lard pork fat, beef tallow, chicken fat, or a combination thereof. These oils may be partially hydrogenated or hydrogenated. Preferably, any of the food compositions described herein can contain palm oil, coconut oil, rapeseed oil, sunflower oil, peanut oil, cottonseed oil, palm kernel oil, olive oil, corn oil, hazelnut oil, linseed oil, rice bran oil, sesame oil, safflower oil, canola oil, flax seed oil, soybean oil, or a combination thereof. More preferably, the food compositions described herein comprise soybean oil, palm oil and combinations thereof. For RUTF compositions, when a partially hydrogenated palm oil is used an emulsifier may not be required. In the various embodiments of the food compositions, when between about 20% to about 50% of the oil is replaced with partially hydrogenated palm oil an emulsifier may not be required.

The food compositions described herein can contain a carbohydrate of cane sugar, a maltodextrin, a rye carbohydrate, a barley carbohydrate, a corn carbohydrate, a cassava carbohydrate, an oat carbohydrate, a rice carbohydrate, a millet carbohydrate, a sorghum carbohydrate, a tapioca carbohydrate, or a combination thereof. The cane sugar can be granulated or powered. These food compositions can also have a humectant of glycerin, maltitol, sorbitol, or a combination thereof. Preferably, the humectant can comprise glycerin.

The food compositions described herein may include less than about 4.5 wt.% peanut flour or peanut butter based on the total weight of the composition.

Another aspect of the invention is a food composition comprising carbohydrate, fat, at least about 15 wt.% soy protein based on the total weight of the composition, and a water activity of less than about 0.85 $a_w$ when measured at 25°C. The food composition can further comprise at least about 3 wt.% humectant based on the total weight of the composition.

Any of the food compositions described herein wherein the composition is in the form of a ready-to-eat filling, a ready-to-eat cheese-flavored filling, a ready-to-eat chew, a ready-to-eat paste, a ready-to-use therapeutic food (RUTF), a ready-to-use supplemental food (RUSF), a confection, a nutritional and/or endurance gel, such as PowerBar® Gel Blasts$_{TM}$ (Nestlé Vevy, Switzerland), Clif® Shots (ClifBar Berkeley, CA) and Gu$_{TM}$ (GU Energy Labs Berkeley, CA), a combination snack, and meals ready-to-eat (MRE).

Yet another aspect is a food product comprising any one of the food compositions described herein wherein the food product is in the form of a bar, a chew, or a confection. The food product wherein the food compositions described herein reduces migration of moisture between components of the food product having differing moisture contents.

A further aspect of the invention is a food product suitable as a supplementary food for use in feeding mild-to-moderate and weight-stabilized severe acute malnourished patients, other vulnerable groups such as the elderly, immune compromised people, pregnant women, lactating women, emergency response feeding, institutional feeding, such as school nutrition programs, correctional facility feeding systems, military applications such as meal ready-to-eat (MRE), and nutritional products for the recreational athlete, such as bikers, campers, and hikers.

In yet another aspect of the invention the food composition can be used as a companion animal food composition or pet treat product. The companion animal food composition or pet treat product can be vegetarian, organic, natural, or a combination thereof.

Other objects and features will be in part apparent and in part pointed out hereinafter.

DETAILED DESCRIPTION

The present invention is directed to a food composition having at least 15 wt.% protein based on the total weight of the composition, a low water activity. The food composition can have less than 4.5 wt.% peanut flour or peanut butter based on the total weight of the composition. The food composition can be used as a functional food paste or a component in various food products. Advantageously, the food composition has a desirable water activity level to be packaged as a ready-to-eat paste having desirable shelf stability. The functional food paste can be a shelf stable food paste with or without water.

The food composition of the invention comprises at least about 15 wt.% protein based on the total weight of the composition, carbohydrate, and fat. The composition has a water activity of less than about 0.85 $a_w$ when measured at 25°C and a shelf-life at 25°C of at least 6 months, a shelf-life at 25°C of at least 12 months, a shelf-life at 25°C of at least 24 months. In various embodiments, the food composition comprises at least about 3 wt.% humectant based on the total weight of the composition.

Protein

The food composition of the invention contains at least about 15 wt.% soy protein based on the total weight of the composition. In various embodiments, the food composition contains from about 15 wt.% to about 30 wt.% soy protein based on the total weight of the composition. In some embodiments from about 15 wt.% to about 20 wt.% protein based on the total weight of the composition.

The protein used in the composition can be a dairy protein, a wheat protein, a canola protein, a corn protein, a lupin protein, an oat protein, a pea protein, a rice protein, a sorghum protein, an amaranth protein, an arrowroot protein, a barley protein, a buckwheat protein, a cassava protein, a channa (garbanzo or chickpea) protein, a millet protein, a peanut protein, a potato protein, a rye protein, a sunflower protein, a tapioca protein, a triticale protein, a whey protein, an egg protein, a soy protein, a white kidney bean protein, a bamboo extract protein, a meat protein, a fish protein, or a combination thereof. In various preferred embodiments, the protein comprises a soy protein.

The vegetable protein compositions described above comprise soy protein. Soybean protein materials which can be used as starting materials are soy flour, soy concentrate, and isolated soy protein (i.e., soy protein isolate). The soy flour, soy concentrate, or isolated soy protein is formed from a soybean starting material which may be soybeans or a soybean derivative. Preferably, the soybean starting material is either soybean cake, soybean chips, soybean meal, soybean flakes, or a mixture of these materials. The soybean cake, chips, meal, or flakes may be formed from soybeans according to conventional procedures in the art, where soybean cake and soybean chips are formed by extraction of part of the oil in soybeans by pressure or solvents, soybean flakes are formed by cracking, heating, and flaking soybeans and reducing the oil content of the soybeans by solvent extraction, and soybean meal is formed by grinding soybean cake, chips, or flakes.

Soy flour can be full fat, enzyme-active, toasted or defatted. As these terms are used herein, a full fat soy flour contains ground whole soybeans containing all of the original oil, usually 18% to 20%. This full fat flour can be enzyme-active or it can be heat-processed or toasted to minimize enzyme action. Enzyme-active soy flour is a full fat soy flour that is minimally heat-treated to keep the natural enzyme activity. Defatted soy flour refers to a comminuted form of defatted soybean material, preferably containing less than 1% oil, formed of particles having a size such that the particles can pass through a No. 100 mesh (U.S. Standard) screen. The soy cake, chips, flakes, meal, or mixture of the materials are comminuted into a soy flour using conventional soy grinding processes. Soy flour has a protein content of from about 49% to less than 65% on a moisture free basis (mfb). Preferably the flour is very finely ground, most preferably so that less than about 1% of the flour is retained on a 300 mesh (U.S. Standard) screen. Acceptable soy flours are available from Cargill, Inc. (Minneapolis, MN), Archer Daniels Midland Company (Decatur, IL), or U.S. Soy, LLC (Mattoon, IL).

Soy concentrate, as the term is used herein, refers to a soy protein material containing from 65% to less than 90% of soy protein (mfb). Soy concentrate is preferably formed from a commercially available defatted soy flake material from which the oil has been removed by solvent extraction. The soy concentrate is produced by an acid leaching process, an alcohol leaching process, or by an aqueous process. In the acid leaching process, the soy flake material is washed with an aqueous solvent having a pH at about the isoelectric point of soy protein, preferably at a pH of about 4 to about 5, and most preferably at a pH of about 4.4 to about 4.6. The isoelectric wash removes a large amount of water soluble carbohydrates and other water soluble components from the flakes, but removes little of the protein and fiber, thereby forming a soy concentrate. The soy concentrate is dried after the isoelectric wash. In the alcohol leaching process, the soy flake material is washed with an aqueous ethyl alcohol solution wherein ethyl alcohol is present at about 60% by weight. The protein and fiber remain insoluble while the carbohydrate soy sugars of sucrose, stachyose and raffinose are leached from the defatted flakes. The soy soluble sugars in the aqueous alcohol are separated from the insoluble protein and fiber and the insoluble protein and fiber are dried to form the soy concentrate. In the aqueous process, the soy concentrate is typically formed by extracting soy protein and water soluble carbohydrates from defatted soy flakes or soy flour with an alkaline aqueous extractant, pH from about 7.0 to about 7.6, preferably at a pH of about 7.1 to about 7.5, and most preferably at a pH of bout 7.3. The aqueous extract, along with the soluble protein and soluble carbohydrates, is separated from materials that are insoluble in the extract, mainly fiber. The aqueous extract may be dried after the separation or further concentrated by ultrafiltration followed by drying to form the soy concentrate. Acceptable soy concentrates are available from Solae LLC (St. Louis, MO) or Archer Daniels Midland Company.

Isolated Soy Protein, as the term is used herein, refers to a soy protein material containing at least 90% protein content, and preferably from about 95% or greater protein content (mfb). Isolated soy proteins are typically formed by extracting soy protein and water soluble carbohydrates from defatted soy flakes or soy flour with an alkaline aqueous extractant. The aqueous extract, along with the soluble protein and soluble carbohydrates, is separated from materials that are insoluble in the extract, mainly fiber. The extract is typically then treated with an acid to adjust the pH of the extract to the isoelectric point of the protein to precipitate the protein from the extract. The precipitated protein is separated from the extract, which retains the soluble carbohydrates, and is dried after being adjusted to a neutral pH or is dried without any pH adjustment. Acceptable soy isolates are available from Solae, LLC or Archer Daniels Midland Company.

In various embodiments, the food composition can comprise less than 4.5 wt.% peanut flour or peanut butter based on the total weight of the composition. In other embodiments, no detectable amount of peanut flour or peanut butter is included.

Moisture

The moisture content of the food composition can have an effect on the texture of the food composition and can be adjusted so the composition is able to be easily handled and easily digested. Thus, the moisture content of the food composition can be greater than 10 wt.% based on the total weight of the composition. If the moisture content is too high, the composition may have a reduced caloric density. In various embodiments, the moisture content is from about 10 wt.% to about 20 wt.% based on the total weight of the composition.

Fat

The food composition of the invention also contains fat. The fat content is adjusted depending on the use. In some cases, higher fat compositions can be prepared having from about 10 wt.% to about 40 wt.% fat based on the total weight of the composition. In other instances, lower fat compositions having from about 20 wt.% to about 35 wt.% fat based on the total weight of the composition are desired.

Typically, the fat is added to the composition in the form of an oil. The oil provides a source of calories and improves the texture and mouthfeel of the food composition. Further, the oil aids in the functionality of the food composition.

The fat can be palm oil, coconut oil, rapeseed oil, sunflower oil, peanut oil, cottonseed oil, palm kernel oil, olive oil, corn oil, hazelnut oil, linseed oil, rice bran oil, sesame oil, safflower oil, canola oil, flax seed oil, soybean oil, blubber, cod liver oil, lard pork fat, beef tallow, chicken fat, or a combination thereof. In other embodiments, the fat can be palm oil, coconut oil, rapeseed oil, sunflower oil, peanut oil, cottonseed oil, palm kernel oil, olive oil, corn oil, hazelnut oil, linseed oil, rice bran oil, sesame oil, safflower oil, canola oil, flax seed oil, soybean oil, or a combination thereof. These oils may be partially hydrogenated or hydrogenated. In various preferred embodiments, the fat comprises soybean oil, palm oil, or combinations thereof. For RUTF compositions, when a partially hydrogenated palm oil is used an emulsifier may not be required. In the various embodiments of the food compositions, when between about 20% to about 50% of the oil is replaced with partially hydrogenated palm oil an emulsifier may not be required.

Carbohydrate

Carbohydrate is also included in the food composition of the invention. The carbohydrate provides sweetness, calories, and acts as a bulking agent. Some carbohydrates, such as powdered sugar, can also provide a smooth mouthfeel to the composition. The carbohydrate content of the composition can be from about 30 wt.% to about 80 wt.% based on the total weight of the composition. In various embodiments, the carbohydrate composition can be from about 50 wt.% to about 70 wt.% based on the total weight of the composition.

The carbohydrate can be a corn syrup solid (CSS), powdered sugar, cane sugar, a maltodextrin, a rye carbohydrate, a barley carbohydrate, a corn carbohydrate, a cassava carbohydrate, an oat carbohydrate, a rice carbohydrate, a millet carbohydrate, a sorghum carbohydrate, a tapioca carbohydrate, or a combination thereof. In various preferred embodiments, the carbohydrate is a corn syrup solid, powdered sugar, or a combination thereof. More Preferably, the carbohydrate is a combination of a corn syrup solid and powdered sugar.

Humectant

Optionally, a humectant can be added to the food composition. The humectant provides texture to the composition and reduces the water activity of the composition. In the embodiments including a humectant, the humectant content of the food composition is at least about 3 wt.% based on the total weight of the composition. In various embodiments, the humectant content is from about 3 wt.% to about 20 wt.% based on the total weight of the composition.
The humectant can be glycerin, maltitol, sorbitol, or a combination thereof. In various preferred embodiments, the humectant comprises glycerin.

Emulsifying Agent

In some instances, an emulsifying agent is added to the composition to aid in binding the fat and minimize oil separation in the food composition. The emulsifying agent can be the product of an esterification of a diglyceride and glycerol, a lecithin, a monoglyceride or a diglyceride of a fatty acid ester, a monoglyceride of a fatty acid, or a phosphated monoglyceride. The diglyceride source for the product of an esterification of a diglyceride and glycerol can be a palm oil, a rapeseed oil, a soybean oil, a sunflower oil, a lard, a tallow, or a combination thereof. In various preferred embodiments, the emulsifying agent is a Dimodan® HS-KA, Dimodan® Visco-Lo, Dimodan® SO or sodium stearoyl lactylate, or a combination thereof. The Dimodan® emulsifying agents are available from Danisco (Copenhagen, Denmark).
Typically, the emulsifying agent is added to the food composition in an amount of 0.3 wt.% to about 1.5 wt.% based on the total weight of the composition; preferably, the emulsifying agent is added to the food composition in an amount of about 0.8 wt.% based on the total weight of the composition.

Flavoring Agent or Preservative

Optionally, a flavoring agent or preservative can be added to the food composition to impart or maintain a particular flavor over the shelf-life of the composition. Typically, a salt or salt-like flavor enhancer can be added to enhance flavor. The salt or salt-like flavor enhancer can be added in the form of flour salt, sea salt, iodized salt, sodium benzoate, benzoic acid, sodium nitrate, sulfur dioxide, sodium sorbate, potassium sorbate, propionic acid, sorbic acid, a sulfite, sodium erythorbate, erythorbic acid, sodium diacetate, sodium succinate, grape seed extract, pine bark extract, apple extract, a tea propylphenol, succinic acid, ascorbic acid, parabens, sodium dehydroacetate, or a combination thereof. In various embodiments, the salt comprises flour salt.
Further, one skilled in the art can use any flavoring agent that can provide a specific flavor profile for the intended end use of the food composition. For example but not limited to, lemon juice, ground ginger, cocoa, peanut butter flavor, vanilla, cheese, or combinations thereof can be added to the food composition depending on the intended end use application. The flavoring agents are typically added at a level of between about 0.05 wt.% to about 5 wt.% based on the total weight of the composition depending on the agent. However, one skilled in the art can use whatever level is required for the end use application.
In other embodiments, an optional flavoring agent that can provide a savory flavor profile can be added to the food composition. For example, meat or spice flavors can be included.

Vitamins and Minerals

For various ready-to-eat food compositions, RUTFs and RUSFs, the vitamin and mineral content needed to provide a standard therapeutic food is detailed in Table 1. For other applications, one skilled in the art can determine the required fortification level for the particular use.

Table 1. Vitamins and Minerals ranges for 100 g of a standard therapeutic food

| Ingredient | Quantity |
|---|---|
| Vitamins | |
| Vitamin A | 0.8-1.1 mg |
| Vitamin D | 15-20 $\mu$g |
| Vitamin E | $\geq$20 mg |
| Vitamin K | 15-30 $\mu$g |
| Vitamin $B_1$ | $\geq$0.5 mg |
| Vitamin $B_2$ | $\geq$1.6 mg |
| Vitamin $B_6$ | $\geq$0.6 mg |
| Vitamin $B_{12}$ | $\geq$1.6 mg |
| Biotin | $\geq$60 $\mu$g |
| Folic Acid | $\geq$200 $\mu$g |
| Niacin | $\geq$5 mg |
| Pantothenic acid | $\geq$3 mg |
| Minerals | |
| Sodium | <290 mg |
| Potassium | 1.1-1.4 g |
| Calcium | 300-600 mg |
| Phosphorus | 300-600 mg |
| Magnesium | 80-140 mg |
| Iron | 10-14 mg |
| Zinc | 11-14 mg |
| Copper | 1.4-1.8 mg |
| Iodine | 70-140 mg |
| Selenium | 20-40 $\mu$g |

Water Activity and Shelf-Stability

The food compositions of the invention have a water activity of less than about 0.85, 0.80, 0.75, 0.70 $a_w$, and preferably less than about 0.65. Qualitatively, water activity is a measure of unbound, free water in a system that is available to support biological and chemical reactions (see Food Science, by Norman N. Potter, Third Edition, A.V.I., pp. 314-316 (1978)). Since water activity is not the same as absolute water content, two foods with the same water content can have very different water activities. Stated another way, the water activity level depends on the degree to which water is free or otherwise bound to food constituents. When a food is in moisture equilibrium with its environment, the water activity of the food will be quantitatively equal to the relative humidity in the head space of the container divided by 100.

In general, as the water activity of a food product increases, its shelf life decreases. That is, the food product becomes more susceptible to mold, fungus, and bacterial growth as the water activity increases.

Typically, the food composition has a shelf-life at 25°C of at least 6, 12, 18, 24, or more months. Preferably, the food composition has a shelf-life at 25°C of at least 24 months.

In various embodiments, the food composition has a peanut flour or peanut butter content less than about 4.5 wt.%, 4 wt.%, 3.5 wt.%, 3 wt.%, 2.5 wt.%, 2 wt.%, 1.5 wt.%, 1 wt.%, 0.5 wt.%, 0.3 wt.% or less based on the total weight of the composition, including a composition free of any detectable amount of peanut flour or peanut butter, or a composition free of peanut flour or peanut butter, based on the total weight of the composition.

PDCAAS

The Protein Digestibility-Corrected Amino Acid Score (PDCAAS) is a method for evaluation of protein quality that is described in Protein Quality Evaluation, Food and Nutrition Paper 51, Rome, Italy: FAO/W HO, 1991, p 35. To calculate a PDCAAS value, a food is analyzed for proximate and amino acid composition. A protein digestibility value is obtained from a data base or determined by the rat balance method. An amino acid score is determined as follows:

$$\text{Amino Acid Score} = \frac{\text{mg of essential amino acid in 1.0 g test protein}}{\text{mg of essential amino acid in 1.0 g reference pattern}}$$

The PDCAAS is then calculated by multiplying the lowest amino acid score x true protein digestibility:

$$\text{PDCAAS} = \text{Lowest Amino Acid Score} \times \text{True Digestibility}$$

Scores above 1.00 are considered as 1.00.

Thus, for the food compositions described herein where the only source of protein is Supro® isolated soy protein, which has a Lowest Amino Acid Score of 1.04 and a True Digestibility of 97%, the PDCAAS is 1.00.

Osmolality

The osmolality of the food compositions described herein is preferably less than about 300 mOsm/kg, 275 mOsm/kg, 250 mOsm/kg, 240 mOsm/kg, 230 mOsm/kg, 220 mOsm/kg, 210 mOsm/kg, 200 mOsm/kg, or less. These osmolality values provide a food composition appropriate for feeding severe acute malnourished patients. When the RUTF is all soy protein, the osmolality can be between about 280 mOsm/kg to about 290 mOsm/kg.

Process

The food composition can be prepared by mixing the fat with the emulsifying agent to form a stable mixture. If used, water, humectant, flavoring agent, and coloring agent are added to the stable mixture at this point. The remaining components are added in any order (i.e., protein, carbohydrate, and any further optional components) with further mixing.

In forming the stable mixture, the fat and the emulsifying agent are mixed and optionally, the mixture is heated depending on the requirements of the particular emulsifying agent. For example, Dimodan® HS-KA is mixed with the fat and heated to less than 52°C (125°F), while Dimodan® Visco-Lo and Dimodan® SO are mixed with the fat and added to the composition without additional heat. Further, sodium stearoyl lactylate is mixed with the water or fat and heated to less than 52°C (125°F). Once the stable mixture is formed, the water, humectant, flavoring agents, and coloring agents are added to the mixture if desired. The rest of the ingredients (e.g., protein, carbohydrates, and any further optional ingredients) are added to the stable mixture in a paddle type mixer. The mixture is blended on low speed until a batter or dough consistency is obtained. The speed is then increased to high shear mixing for an appropriate time. The mixer is periodically stopped and the mixture is scraped from the sides of the container.

Food Applications

The food composition described herein can be formulated or incorporated into various food products. For example, the food composition can be in the form of a ready-to-eat paste, a chew, a confection, or a filling. Further, the food composition can be incorporated into a ready-to-eat paste, a chew, filling or bar, or used as minimize moisture in a food product having components with differing moisture contents. Various other food products known in the art can be developed as well.

The food application of the present invention may be sweet or savory. They are formed by blending the fat, emulsifier, optional water; a carbohydrate containing material containing at least one carbohydrate; optional flavor ingredients such as cocoa powder, peanut flavor, vanilla, chocolate, lemon, caramel, cheese, and spices such as cinnamon, cloves, ginger, paprika, ground chilies, pepper; and any other optional, desired ingredients such as humectant, vitamins and minerals into a dough. The dough is then formed into desired shapes by extrusion or sheeting and cutting according to conventional processes for extruding or sheeting and cutting. The dough may be heated during the process of forming, shaping, or extruding. If desired, the formed product may then be enrobed in a coating.

Chews may be sweet or savory. They can be formed into any shape desired including small squares, short or long cylinders, or strips.

Fillings may be sweet or savory. They may be used as a nougat-like filling of a food such as a bar, confection, cookie, cupcake, muffin, or cake. They may be used as a savory filling of a baked product such as cracker, pretzel, or bread.

Confectionary are sweet and include caramels, toffees, and extruded bars among other items.

The food compositions can be in the form of a ready-to-use therapeutic food (RUTF). RUTFs are suitable for feeding severe acute malnourished patients. RUTFs can be in the form of pastes, including spreads and compressed products such as biscuit, cookie, confection, or cracker forms. In any of these forms, the RUTF is energy-dense, nutrient-dense, and resistant to microbial growth due to low water activity (less than 0.85 $a_w$). RUTFs do not need to be prepared in any way prior to consumption. Typically, RUTFs contain no added water.

The food compositions can also be in the form of a ready-to-use supplementary food (RUSF). RUSFs are suitable for feeding mild-to-moderate and weight-stabilized severe acute malnourished patients, other vulnerable groups such as the elderly, immune compromised people, pregnant women, lactating women, emergency response feeding, institutional feeding, such as school nutrition programs, correctional facility feeding systems, military applications such as meal ready-to-eat (MRE), and recreational nutrition, such as biking, camping, hiking applications. RUSFs can be in the form of pastes, including spreads, compressed products such as biscuit, cookie, confection, or cracker forms, and beverages. RUSFs may or may not contain added water.

The food compositions can be in the form of a mix or flour, including flour blends, to which fluids and other ingredients known in the art may be added to form a food product. These food products can be heated, baked, cooked, or extruded. These food products can be used as a supplementary food for use in feeding mild-to-moderate and weight-stabilized severe acute malnourished patients, other vulnerable groups such as the elderly, immune compromised people, pregnant women, lactating women, emergency response feeding, institutional feeding, such as school nutrition programs, correctional facility feeding systems, military applications such as meal ready-to-eat (MRE), and nutritional products for the recreational athlete, such as bikers, campers, and hikers.

The food composition can be in the form of a companion animal food composition or pet treat product. The companion animal food composition or pet treat product can be vegetarian, organic, natural, or a combination thereof.

Definitions

Confection (confectionary). The term "confection" as used herein refers to food products that taste sweet.

Functional food paste. The term "functional food paste" as used herein refers to food pastes that may deliver low spread during heating, reduce water migration, reduce oil separation, may be extrudable, compressible, pumpable, formable, may reduce deformation during distribution and storage, may be spreadable, nutritious, and combinations thereof. Functional food pastes are shelf stable food pastes with or without added water, including RUSFs with and without added water, RUTFs and ready-to-eat pastes. Added water means addition of water as an ingredient at any point in the process not including naturally occurring moisture present in the food ingredients.

Moisture Content. The term "moisture content" as used herein refers to the amount of moisture in a food ingredient or product. The moisture content of a soy material can be determined by Official Methods of Analysis of the AOAC International, 16th Edition, Method 934.06, Locator 37.1.10, and Method 925.45, Locator 44.1.03, which is incorporated herein by reference in its entirety. Moisture content is calculated according to the formula: Moisture content (%)=100x[(loss in mass (grams)/mass of sample (grams)].

Protein Content. Official Methods of Analysis of the AOAC International, Method 988.05, Locator #4.2.03; Method 920.87 Locator #32.1.22; Method 991.20 Locator #33.2.11 can be used to determine the protein content of a soy material sample.

RUTF. The term "RUTF" as used herein refers to an energy-dense, nutrient-dense, soft or crushable food suitable for feeding severe acute malnourished patients which is resistant to microbial growth due to low water activity (less than 0.85 $a_w$). RUTFs will have a nutrient profile similar to the F100 (Community-Based Management of Severe Acute Malnutrition, A Joint Statement by the World Health Organization, the World Food Program, the United Nations System Standing Committee on Nutrition, and the United Nations Children's Fund, "Nutritional Composition Table on p.6, May 2007). RUTFs do not require preparation prior to consumption. RUTFs can be in the form of pastes, including spreads, and compressed products such as biscuit, cookie, confection, or cracker forms.

RUSF. The term "RUSF" as used herein refers to food compositions suitable for feeding mild-to-moderate and weight-stabilized severe acute malnourished patients, other vulnerable groups such as the elderly, immune compromised people, pregnant women, lactating women, emergency response feeding, institutional feeding, such as school nutrition programs, correctional facility feeding systems, military applications such as meal ready-to-eat (MRE), and recreational nutrition, such as biking, camping, hiking applications. RUSFs do not require preparation prior to consumption or use. RUSFs may or may not contain added water. RUSFs can be in the form of pastes, including spreads, compressed products such as biscuit, cookie, confection, or cracker forms, and beverages.

Soy Protein Concentrate. The term "soy protein concentrate" as used herein refers to a soy material having a protein content of from about 65% to less than about 90% soy protein on a moisture-free basis. Soy protein concentrate also contains soy cotyledon fiber, typically from about 3.5% up to about 20% soy cotyledon fiber by weight on a moisture-free basis. A soy protein concentrate is formed from soybeans by removing the hull and germ of the soybean, flaking or grinding the cotyledon and removing oil from the flaked or ground cotyledon, and separating the soy protein and soy cotyledon fiber from the soluble carbohydrates of the cotyledon.

Soy Flour. The term "soy flour" as used herein refers to a comminuted form of defatted soybean material, preferably containing less than about 1 % oil, formed of particles having a size such that the particles can pass through a No. 100 mesh (U.S. Standard) screen. The soy cake, chips, flakes, meal, or mixture of the materials are comminuted into soy flour using conventional soy grinding processes. Soy flour has a soy protein content of about 49% to about 65% on a moisture free basis. Preferably the flour is very finely ground, most preferably so that less than about 1% of the flour is retained on a 300 mesh (U.S. Standard) screen.

Isolated Soy Protein. The term "isolated soy protein" as used herein is a soy material having a protein content of at least about 90% soy protein on a moisture free basis. An isolated soy protein is formed from soybeans by removing the hull and germ of the soybean from the cotyledon, flaking or grinding the cotyledon and removing oil from the flaked or ground cotyledon, separating the soy protein and carbohydrates of the cotyledon from the cotyledon fiber, and subsequently separating the soy protein from the carbohydrates.

Having described the invention in detail, it will be apparent that modifications and variations are possible without departing from the scope of the invention defined in the appended claims.

EXAMPLES

The following non-limiting examples are provided to further illustrate the present invention.

*Materials for all examples.* The peanut butter flavor was available as Peanut Flavor Natural & Artificial from International Flavors and Fragrances (New York, NY). The vanilla was available as Natural & Artificial Vanilla Flavor from Degussa Flavors & Fruit Systems. (Cincinnati, OH). The Gerkens® 10/12 Russet Plus cocoa powder was available from Cargill (Minneapolis, MN). The 20DE corn syrup solids were available from Grain Processing Corporation (Muscatine, IA). The powdered sugar was available from Schnucks Markets, Inc (St. Louis, MO). The flour salt was available from Cargill (Minneapolis, MN). The Dimodan® HS-KA, Dimodan® Visco-Lo, and Dimodan® SO emulsifiers were available from Danisco (Copenhagen, Denmark). The sodium stearoyl lactylate was available as Grinsted SSL P 55 VEG from Danisco (Copenhagen, Denmark). The Supro® 661 (Isolated Soy Protein) was available from Solae, LLC (St. Louis, MO). The glycerin was available as 'Soapers choice' Vegetable glycerin USP from Columbus Foods (Des Plaines, IL). The ground ginger was available from ACH Food Companies Inc. (Memphis, TN).

Example 1: RUSF Formulations Peanut Butter Type, Ginger Lemon Type, and Chocolate Type

The formulations listed in Table 2 were prepared by the following process. The soybean oil was mixed with the Dimodan® HS-KA and heated to 52°C (125°F). Once the soybean oil and Dimodan® HS-KA were mixed, the water, glycerin, and flavoring agents were added to the mixture followed by blending to form a stable mixture. The rest of the ingredients (e.g., Supro® 661, corn syrup solids, and powdered sugar) were added to the stable mixture in a paddle mixer. The mixture was blended on low speed until a batter or dough consistency was obtained. The speed was then increased to high shear mixing for 15 minutes. The mixer was stopped every 5 minutes and the mixture was scraped from the sides of the container before mixing was continued. The food compositions so formed had the properties shown in Table 3. Tables 4 to 6 detail the nutrition profiles as would be required on "nutrition facts" labels for food by the United States Food and Drug Administration.

Table 2. RUSF Formulations

| | Peanut Butter Type | | Ginger/Lemon Type | | Chocolate Type | |
|---|---|---|---|---|---|---|
| **Ingredient** | | | | | | |
| | % | grams | % | grams | % | grams |
| Water | 10 | 200 | 10 | 200 | 10 | 200 |
| Glycerin | 14.3 | 286 | 14.3 | 286 | 14.3 | 286 |
| Corn syrup solids (CSS), 20DE | 33.84 | 676.8 | 32.9 | 658 | 22 | 440 |
| Powdered sugar | 12 | 240 | 12 | 240 | 22 | 440 |
| Supro® 661 | 17.2 | 344 | 17.2 | 344 | 16.7 | 334 |
| Soybean Oil | 11.8 | 236 | 11.8 | 236 | 11.4 | 228 |
| Cocoa Powder | - | - | - | - | 3 | 60 |
| Flour salt | 0.2 | 4 | 0.1 | 2 | 0.05 | 1 |
| Lemon juice | - | - | 1 | 20 | - | - |
| Ginger, ground | - | - | 0.2 | 4 | - | - |
| Peanut butter flavor | 0.16 | 3.2 | - | - | | |
| Vanilla | | | | | 0.05 | 1 |
| Dimodan® HS-KA | 0.5 | 10 | 0.5 | 10 | 0.5 | 10 |
| Total | 100 | 2000 | 100 | 2000 | 100 | 2000 |

Table 3. Product Analysis

| Analysis (NPAL) | **Peanut Butter Type** | **Ginger/Lemon Type** | **Chocolate Type** |
|---|---|---|---|
| Protein % (PRKR) | 14.80 | 14.70 | 15.10 |
| Moisture % (MVOS) | 11.91 | 12.99 | 11.65 |
| Fat % (FTAH) | 13.20 | 13.60 | 13.70 |
| Ash % (ASHS) | 0.738 | 0.704 | 0.896 |
| Carbohydrate (by diff) | 59.35 | 58.01 | 58.65 |
| Coliforms (MPN/g) | <3 | <3 | <3 |
| E.coli (MPN/g) | <3 | <3 | <3 |
| Salmonella (per25g) | negative | negative | negative |
| Mesophilic aerobic | 10* | <10 | <10 |
| plate count (cfu/g) | | | |
| Mold (cfu/g) | 10 | <10 | <10 |
| Yeast (cfu/g) | <10 | <10 | <10 |
| Water Activity ($a_w$) | 0.574 | 0.595 | 0.584 |

Table 4. Nutrition profile for Peanut Butter Type RUSF

| **NUTRITION FACTS** | |
|---|---|
| Serving Size (100 g)<br>Servings per Container | |
| Amount per Serving | |

(continued)

| NUTRITION FACTS | |
|---|---|
| Serving Size (100 g) Servings per Container | |
| **Calories** 410 | Calories from Fat 120 |
| | % Daily Value |
| **Total Fat** 13g **20%** | |
| Saturated Fat 2.5g **12%** | |
| Polyunsaturated Fat 9g | |
| Monounsaturated Fat 3g | |
| **Cholesterol** 0mg **0%** | |
| **Sodium** 260mg **11%** | |
| **Potassium** 20mg **1%** | |
| **Total Carbohydrates** 58g **19%** | |
| Dietary Fiber 0g **0%** | |
| Sugars 16g | |
| Other Carbohydrates 42q | |
| **Protein** 15g | |
| Vitamin A 0% | Vitamin C 0% |
| Calcium 4% | Iron 15% |
| Vitamin D 0% | Vitamin E 0% |
| Vitamin K 0% | Thiamin 2% |
| Riboflavin 2% | Niacin 0% |
| Vitamin B6 0% | Folate 8% |
| Vitamin B12 0% | Biotin 15% |
| Pantothenic Acid 0% | Phosphorus 15% |
| Iodine 10% | Magnesium 0% |
| Zinc 4% | Selenium 0% |
| Copper 15% | |

INGREDIENTS: Corn Syrup Solids, Soy Protein Isolate, Glycerin, Sugar, Soybean oil, Water, Mono & Diglycerides, Salt, and Artificial Flavor

Table 5. Nutrition profile for Ginger/Lemon Type RUSF

| NUTRITION FACTS | |
|---|---|
| Serving Size (100 g) Servings per Container | |
| Amount per Serving | |
| **Calories** 410 | Calories from Fat 120 |
| | % Daily Value |
| **Total Fat** 13g **20%** | |
| Saturated Fat 2.5g **12%** | |
| Polyunsaturated Fat 9g | |
| Monounsaturated Fat 3g | |
| **Cholesterol** 0mg **0%** | |
| **Sodium** 220mg **9%** | |
| **Potassium** 20mg 1% | |
| **Total Carbohydrates** 58g **19%** | |
| Dietary Fiber 0g **0%** | |
| Sugars 16g | |
| Other Carbohydrates 42g | |
| **Protein** 15g | |
| Vitamin A 0% | Vitamin C 0% |
| Calcium 4% | Iron 15% |
| Vitamin D 0% | Vitamin E 0% |
| Vitamin K 0% | Thiamin 2% |
| Riboflavin 2% | Niacin 0% |
| Vitamin B6 0% | Folate 8% |
| Vitamin B12 0% | Biotin 15% |
| Pantothenic Acid 0% | Phosphorus 15% |
| Iodine 10% | Magnesium 0% |
| Zinc 4% | Selenium 0% |
| Copper 15% | |
| | |
| INGREDIENTS: Corn Syrup Solids, Soy Protein Isolate, Glycerin, Sugar, Soybean oil, Water, Lemon Juice, Mono & Diglycerides, Ginger, and Salt | |

Table 6. Nutrition profile for Chocolate Type RUSF

| NUTRITION FACTS | |
|---|---|
| Serving Size (100 g) Servings per Container | |
| Amount per Serving | |
| **Calories** 410 | Calories from Fat 120 |
| | % Daily Value |
| **Total Fat** 13g **20%** | |
| Saturated Fat 2.5g **13%** | |
| Polyunsaturated Fat 9g | |
| Monounsaturated F at 3g | |
| **Cholesterol** 0mg **0%** | |
| **Sodium** 190mg **8%** | |
| **Potassium** 140mg **4%** | |
| **Total Carbohydrate** 59g **20%** | |
| Dietary Fiber less than 1 g **4%** | |
| Sugars 23g | |
| Other Carbohydrates 33g | |
| **Protein** 15g | |
| Vitamin A 0% | Vitamin C 0% |
| Calcium 4% | Iron 20% |
| Vitamin D 0% | Vitamin E 0% |
| Vitamin K 0% | Thiamin 2% |
| Riboflavin 2% | Niacin 0% |
| Vitamin B6 0% | Folate 8% |
| Vitamin B12 0% | Biotin 15% |
| Pantothenic Acid 0% | Phosphorus 15% |
| Iodine 8% | Magnesium 4% |
| Zinc 4% | Selenium 0% |
| Copper 15% | |
| | |
| INGREDIENTS: Corn Syrup Solids, Sugar, Soy Protein Isolate, Glycerin, Soybean oil, Water, Cocoa Processed with Alkali, Mono & Diglycerides, Natural and Artificial Vanilla, and Salt. | |

Example 2: RUSF Reduced Glycerin Formulations

The process of Example 1 was used to prepare the RUSF formulations detailed in Table 7 having lower glycerin content and correspondingly higher soybean oil content. Tables 8 to 10 detail the nutrition profiles as would be required on "nutrition facts" labels for food by the United States Food and Drug Administration.

Table 7. RUSF Reduced Glycerin Formulations

|  | Peanut Butter Type | | Ginger/Lemon Type | | Chocolate Type | |
|---|---|---|---|---|---|---|
| **Ingredients** | | | | | | |
|  | % | grams | % | grams | % | grams |
| Water | 10.15 | 203.00 | 10.15 | 203.00 | 10.15 | 203.00 |
| Glycerin | 6.60 | 132.00 | 6.60 | 132.00 | 6.60 | 132.00 |
| Corn syrup solids, 20DE | 33.84 | 676.80 | 32.90 | 658.00 | 22.00 | 440.00 |
| Powdered sugar | 12.00 | 240.00 | 12.00 | 240.00 | 22.00 | 440.00 |
| Supro® 661 | 17.20 | 344.00 | 17.20 | 344.00 | 16.70 | 334.00 |
| Soybean Oil | 19.35 | 387.00 | 19.35 | 387.00 | 18.95 | 379.00 |
| Cocoa Powder | - | - | - | - | 3.00 | 60.00 |
| Flour salt | 0.20 | 4.00 | 0.10 | 2.00 | 0.05 | 1.00 |
| Lemon juice | - | - | 1.00 | 20.00 | - | - |
| Ginger, qround | - | - | 0.20 | 4.00 | - | - |
| Peanut butter flavor | 0.16 | 3.20 | - | - |  |  |
| Vanilla |  |  |  |  | 0.05 | 1.00 |
| Dimodan® HS-KA | 0.50 | 10.00 | 0.50 | 10.00 | 0.50 | 10.00 |
| Total | 100.0 0 | 2000.0 0 | 100.0 0 | 2000.0 0 | 100.0 0 | 2000.0 0 |

Table 8. Nutrition profile for Peanut Butter Type RUSF with reduced glycerin

| NUTRITION FACTS | |
|---|---|
| Serving Size (100 g) <br> Servings per Container | |
| Amount per Serving | |
| **Calories** 450 Calories from Fat 190 | |
| % Daily Value | |
| **Total Fat** 21 g <br> **32%** | |
| Saturated Fat 3.5g <br> **18%** | |
| Polyunsaturated Fat 15g | |
| Monounsaturated Fat 5g | |
| **Cholesterol** 0mg <br> **0%** | |
| **Sodium** 260mg <br> **11%** | |

14

(continued)

| NUTRITION FACTS | | |
|---|---|---|
| Serving Size (100 g)<br>Servings per Container | | |
| Amount per Serving | | |
| **Potassium** 20mg<br>**1%** | | |
| **Total Carbohydrates** 51 g<br>**17%** | | |
| Dietary Fiber 0g<br>**0%** | | |
| Sugars 16g | | |
| Other | | |
| **Protein** 15g | | |
| Vitamin A 0% | Vitamin C 0% | |
| Calcium 4% | Iron 15% | |
| Vitamin D 0% | Vitamin E 0% | |
| Vitamin K 0% | Thiamin 2% | |
| Riboflavin 2% | Niacin 0% | |
| Vitamin B6 0% | Folate 8% | |
| Vitamin B12 0% | Biotin 15% | |
| Pantothenic Acid 0% | Phosphorus 15% | |
| Iodine 10% | Magnesium 0% | |
| Zinc 4% | Selenium 0% | |
| Copper 15% | | |
| | | |
| INGREDIENTS: Corn Syrup Solids, Soybean oil, Soy Protein Isolate, Sugar, Water, Glycerin, Mono & Diglycerides, Salt, and Artificial Flavor. | | |

Table 9. Nutrition profile for Ginger/Lemon Type RUSF with reduced glycerin

| NUTRITION FACTS | | |
|---|---|---|
| Serving Size (100 g)<br>Servings per Container | | |
| Amount per Serving | | |
| **Calories** 450<br>190 | Calories from Fat | |
| | % Daily Value | |
| **Total Fat** 21 g<br>**32**% | | |
| Saturated Fat 3.5g<br>**18%** | | |
| Polyunsaturated Fat 15g | | |

(continued)

| NUTRITION FACTS | |
|---|---|
| Serving Size (100 g) Servings per Container | |
| Monounsaturated Fat 5g | |
| **Cholesterol** 0mg **0%** | |
| **Sodium** 220mg **9%** | |
| **Potassium** 20mg **1%** | |
| **Total Carbohydrates** 50g **17**% | |
| Dietary Fiber 0g **0%** | |
| Sugars 16g | |
| Other Carbohydrates 34g | |
| **Protein** 15g | |
| Vitamin A 0% | Vitamin C 0% |
| Calcium 4% | Iron 15% |
| Vitamin D 0% | Vitamin E 0% |
| Vitamin K 0% | Thiamin 2% |
| Riboflavin 2% | Niacin 0% |
| Vitamin B6 0% | Folate 8% |
| Vitamin B12 0% | Biotin 15% |
| Pantothenic Acid 0% | Phosphorus 15% |
| Iodine 10% | Magnesium 0% |
| Zinc 4% | Selenium 0% |
| Copper 15% | |

INGREDIENTS: Corn Syrup Solids, Soybean oil, Soy Protein Isolate, Sugar, Water, Glycerin, Lemon Juice, Mono & Diglycerides, Ginger, and Salt.

Table 10. Nutrition profile for Chocolate Type RUSF with reduced glycerin

| NUTRITION FACTS | |
|---|---|
| Serving Size (100 g) Servings per Container | |
| Amount per Serving | |
| **Calories** 440 190 | Calories from Fat |
| | % Daily Value |
| **Total Fat** 21 g **32%** | |
| Saturated Fat 3.5g **18%** | |

(continued)

| NUTRITION FACTS | |
|---|---|
| Polyunsaturated Fat 15g | |
| Monounsaturated Fat 5g | |
| **Cholesterol** 0mg **0%** | |
| **Sodium** 190mg **8%** | |
| **Potassium** 140mg **4%** | |
| **Total Carbohydrates** 51 g **17%** | |
| Dietary Fiber less than 1 g **4%** | |
| Sugars 23g | |
| Other Carbohydrates 26g | |
| **Protein** 15g | |
| Vitamin A 0% | Vitamin C 0% |
| Calcium 4% | Iron 20% |
| Vitamin D 0% | Vitamin E 0% |
| Vitamin K 0% | Thiamin 2% |
| Riboflavin 2% | Niacin 0% |
| Vitamin B6 0% | Folate 8% |
| Vitamin B12 0% | Biotin 15% |
| Pantothenic Acid 0% | Phosphorus 15% |
| Iodine 8% | Magnesium 4% |
| Zinc 4% | Selenium 0% |
| Copper 15% | |

INGREDIENTS: Corn Syrup Solids, Sugar, Soybean oil, Soy Protein Isolate, Water, Glycerin, Cocoa Processed with Alkali, Mono & Diglycerides, Natural and Artificial Flavor, Salt.

Example 3: RUSF Formulations using Dimodan® Visco-Lo and Dimodan® SO

A process substantially similar to the process of Example 1 was used to prepare the RUSF formulations detailed in Table 11. The difference between the formulation processes was that Dimodan® Visco-Lo or Dimodan® SO was substituted for the Dimodan® HS-KA (i.e., the emulsifying agent) and no heating was needed when the Dimodan® Visco-Lo or Dimodan® SO was mixed with the soybean oil.

Table 11. RUSF Formulations with Dimodan® Visco-Lo

| | Ginger/Lemon Type | | Ginger/Lemon Type | |
|---|---|---|---|---|
| **Ingredients** | | | | |
| | % | Grams | % | grams |
| Water | 10.15 | 203.00 | 10.15 | 203.00 |
| Glycerin | 8.50 | 170.00 | 8.50 | 170.00 |
| Corn syrup solids, 20DE | 32.70 | 654.00 | 32.70 | 654.00 |
| Powdered sugar | 12.00 | 240.00 | 12.00 | 240.00 |
| Supro® 661 | 17.20 | 344.00 | 17.20 | 344.00 |

(continued)

|  | Ginger/Lemon Type | | Ginger/Lemon Type | |
| --- | --- | --- | --- | --- |
| **Ingredients** | | | | |
|  | % | Grams | % | grams |
| Soybean Oil | 17.65 | 353.00 | 17.65 | 353.00 |
| Flour salt | 0.10 | 2.00 | 0.10 | 2.00 |
| Lemon juice | 1.00 | 20.00 | 1.00 | 20.00 |
| Ginger, ground | 0.20 | 4.00 | 0.20 | 4.00 |
| Dimodan® SO | | | 0.50 | 10.00 |
| Dimodan® Visco-Lo | 0.50 | 10.00 | | |
| Total | 100.00 | 2000.00 | 100.00 | 2000.00 |

Example 4: RUSF Formulations using sodium stearoyl lactylate

A process substantially similar to the process of Example 1 was used to prepare the RUSF formulations detailed in Table 12. The difference between the formulation processes was that sodium stearoyl lactylate was substituted for the Dimodan® HS-KA (i.e., the emulsifying agent) and the sodium stearoyl lactylate was mixed with the soybean oil and heated to 66°C (150°F). Tables 13 to 15 detail the nutrition profiles as would be required on "nutrition facts" labels for food by the United States Food and Drug Administration.

Table 12. RUSF Formulations with sodium stearoyl lactylate

|  | Peanut Butter Type | | Ginger/Lemon Type | | Chocolate Type | |
| --- | --- | --- | --- | --- | --- | --- |
| **Ingredients** | | | | | | |
|  | % | grams | % | grams | % | Grams |
| Water | 10.15 | 203.00 | 10.15 | 203.00 | 10.15 | 203.00 |
| Glycerin | 8.50 | 170.00 | 8.50 | 170.00 | 8.50 | 170.00 |
| Corn syrup solids, 20DE | 33.84 | 676.80 | 32.90 | 658.00 | 22.00 | 440.00 |
| Powdered sugar | 12.00 | 240.00 | 12.00 | 240.00 | 22.00 | 440.00 |
| Supro® 661 | 17.20 | 344.00 | 17.20 | 344.00 | 16.70 | 334.00 |
| Soybean Oil | 17.65 | 353.00 | 17.65 | 353.00 | 17.65 | 353.00 |
| Cocoa Powder | | - | - | - | 3.00 | 60.00 |
| Flour salt | 0.20 | 4.00 | 0.10 | 2.00 | 0.05 | 1.00 |
| Lemon juice | - | - | 1.00 | 20.00 | - | - |
| Ginger, ground | - | - | 0.20 | 4.00 | - | - |
| Peanut butter flavor | 0.16 | 3.20 | - | - | | |
| Vanilla | | | | | 0.05 | 1.00 |
| Sodium stearoyl lactylate (Grinsted® SSL P55) | 0.30 | 6.00 | 0.30 | 6.00 | 0.30 | 6.00 |
| Total | 100.00 | 2000.00 | 100.00 | 2000.00 | 100.00 | 2000.00 |

Table 13. Nutrition profile for Peanut Butter Type RUSF with sodium stearoyl lactylate

| **NUTRITION FACTS** | |
| --- | --- |
| Serving Size (100 g) Servings per Container | |

(continued)

| NUTRITION FACTS | | |
|---|---|---|
| Amount per Serving | | |
| **Calories** 440 170                                    Calories from Fat | | |
| % Daily Value | | |
| **Total Fat** 19g **29%** | | |
| Saturated Fat 3g **15%** | | |
| Polyunsaturated Fat 14g | | |
| Monounsaturated Fat 4.5g | | |
| **Cholesterol** 0mg **0%** | | |
| **Sodium** 260mg **11%** | | |
| **Potassium** 20mg **1%** | | |
| **Total Carbohydrates** 53g **18%** | | |
| Dietary Fiber 0g **0%** | | |
| Sugars 16g | | |
| Other Carbohydrates 37g | | |
| **Protein** 15g | | |
| Vitamin A 0% | Vitamin C 0% | |
| Calcium 4% | Iron 15% | |
| Vitamin D 0% | Vitamin E 0% | |
| Vitamin K 0% | Thiamin 2% | |
| Riboflavin 2% | Niacin 0% | |
| Vitamin B6 0% | Folate 8% | |
| Vitamin B12 0% | Biotin 15% | |
| Pantothenic Acid 0% | Phosphorus 15% | |
| Iodine 10% | Magnesium 0% | |
| Zinc 4% | Selenium 0% | |
| Copper 15% | | |
| | | |
| INGREDIENTS: Corn Syrup Solids, Soybean oil, Soy Protein Isolate, Sugar, Water, Glycerine, Mono & Diglycerides, Salt, and Artificial Flavor. | | |

Table 14. Nutrition profile for Ginger/Lemon Type RUSF with sodium stearoyl lactylate

| NUTRITION FACTS | |
|---|---|
| Serving Size (100 g) Servings per Container | |
| Amount per Serving | |
| **Calories** 440 170                                    Calories from Fat | |
| % Daily Value | |
| **Total Fat** 19g **29%** | |

(continued)

| NUTRITION FACTS | | |
|---|---|---|
| Saturated Fat 3g **15%** | | |
| Polyunsaturated Fat 14g | | |
| Monounsaturated Fat 4.5g | | |
| **Cholesterol** 0mg **0%** | | |
| **Sodium** 220mg **9%** | | |
| **Potassium** 20mg **1%** | | |
| **Total Carbohydrates** 52g **17%** | | |
| Dietary Fiber 0g **0%** | | |
| Sugars 16g | | |
| Other Carbohydrates 36g | | |
| **Protein** 15g | | |
| Vitamin A 0% | Vitamin C 0% | |
| Calcium 4% | Iron 15% | |
| Vitamin D 0% | Vitamin E 0% | |
| Vitamin K 0% | Thiamin 2% | |
| Riboflavin 2% | Niacin 0% | |
| Vitamin B6 0% | Folate 8% | |
| Vitamin B12 0% | Biotin 15% | |
| Pantothenic Acid 0% | Phosphorus 15% | |
| Iodine 10% | Magnesium 0% | |
| Zinc 4% | Selenium 0% | |
| Copper 15% | | |
| | | |
| INGREDIENTS: Corn Syrup Solids, Soybean oil, Soy Protein Isolate, Sugar, Water, Glycerin, Lemon Juice, Mono & Diglycerides, Ginqer, and Salt. | | |

Table 15. Nutrition profile for Chocolate Type RUSF with sodium stearoyl lactylate

| NUTRITION FACTS | | |
|---|---|---|
| Serving Size (100 g) Servings per Container | | |
| Amount per Serving | | |
| **Calories** 440 170 | Calories from Fat | |
| | % Daily Value | |
| **Total Fat** 19g **29%** | | |
| Saturated Fat 3g **16%** | | |
| Polyunsaturated Fat 13g | | |
| Monounsaturated Fat 4.5g | | |
| **Cholesterol** 0mg **0%** | | |

(continued)

| NUTRITION FACTS | |
|---|---|
| **Sodium** 190mg **8%** | |
| **Potassium** 140mg **4%** | |
| **Total Carbohydrates** 53g **18%** | |
| Dietary Fiber less than 1 g **4%** | |
| Sugars 23g | |
| Other Carbohydrates 28g | |
| **Protein** 15g | |
| Vitamin A 0% | Vitamin C 0% |
| Calcium 4% | Iron 20% |
| Vitamin D 0% | Vitamin E 0% |
| Vitamin K 0% | Thiamin 2% |
| Riboflavin 2% | Niacin 0% |
| Vitamin B6 0% | Folate 8% |
| Vitamin B12 0% | Biotin 15% |
| Pantothenic Acid 0% | Phosphorus 15% |
| Iodine 8% | Magnesium 4% |
| Zinc 4% | Selenium 0% |
| Copper 15% | |
| | |
| INGREDIENTS: Corn Syrup Solids, Sugar, Soybean oil, Soy Protein Isolate, Water, Glycerin, Cocoa Processed with Alkali, Mono & Diglycerides, Natural and Artificial Flavor, Salt. | |

Example 5: RUTF Formulations to match current RUTF Requirements of the World Health Organization (WHO).

The RUTF formulation in Table 16 was provided to meet a requirement of a maximum moisture content of 2.5 wt.% based on total weight of the composition and the RUTF standards of the WHO. Vitamin Premix 1 was prepared to provide the minimum level of vitamins and minerals in Table 1 and Vitamin Premix 2 was prepared to provide the maximum level of vitamins and minerals in Table 1. The formulations were prepared similarly to the process described in Example 1. The all soy protein RUTF formulation is shown in Table 16.

Table 16 RUTF All Soy Protein

| | All Soy Protein RUTF | |
|---|---|---|
| | | |
| Ingredients | % | grams |
| Corn syrup solids, 25DE | 1.230 | 12.30 |
| Powdered sugar | 49.540 | 495.40 |
| Supro® 661 | 16.350 | 163.50 |
| Soybean Oil | 32.000 | 320.00 |
| Peanut butter Flavor #SN038750 IFF | 0.170 | 1.70 |
| Vit/Min FT022094 | 0.110 | 1.10 |
| Mono-and diglyceride, Dimodan® HS-K/A | 0.600 | 6.000 |

(continued)

| | All Soy Protein RUTF | |
|---|---|---|
| | | |
| Ingredients | % | grams |
| Total | 100.000 | 1000.00 0 |

Example 6: 50:50 Carbohydrate (Powdered Sugar: CSS) Soybean Oil RUTF Formulation

The following process was used to prepare the RUTF formulation detailed in Table 17. Peanut Flavor, color and Dimodan® Visco-Lo were added to the oil and mixed for 3 minutes. Dry ingredients were added to the fat mixture in a paddle mixer. The mixture was blended on low speed until a batter or dough consistency was seen. The speed was increased to obtain high shear mixing for 15 minutes. The paddle mixer was set on the highest speed setting and was controlled using a variable speed transformer. Every 5 minutes the mixer was stopped and the sides of the container were scraped down. The sample was then transferred to a suitable container for storage.

Table 17 50:50 Carbohydrate (Powdered Sugar: CSS) Soybean Oil RUTF Formulation

| | 50:50 Carbs/Soybean Oil | |
|---|---|---|
| Ingredients | % | Grams |
| Powdered sugar, | 25.540% | 255.40 |
| Supro® 661 | 16.350% | 163.50 |
| Soybean Oil, Gateway | 32.000% | 320.00 |
| Palm Oil (Part. Hydrogenated) | -- | -- |
| Corn Syrup Solids (CSS) 25DE, GPC | 25.130% | 251.30 |
| Peanut Flavor #SN960656 IFF | 0.170% | 1.70 |
| Vitamin/Mineral Premix | 0.110% | 1.10 |
| Dimodan® Visco-Lo | 0.700% | 7.00 |
| | 100.000% | 1000.000 |

Example 7: 50:50 Carbohydrate (Powdered Sugar: CSS) Palm Oil RUTF Formulation

A process substantially similar to the process of Example 6 was used to prepare the RUTF formulation detailed in Table 18. The partially hydrogenated palm oil was heated to 43°C (110°F) (above melting point of the palm oil) so the fat would be in a fluid state.

Table 18 50:50 Carbohydrate (Powdered Sugar: CSS) Palm Oil RUTF Formulation

| | 50:50 Carbs/Palm Oil | |
|---|---|---|
| Ingredients | % | grams |
| Powdered sugar, | 25.540% | 255.40 |
| Supra® 661 | 16.350% | 163.50 |
| Soybean Oil, Gateway | - | - |
| Palm Oil (Part. Hydroqenated) | 32.000% | 320.00 |
| Corn Syrup Solids 25DE, GPC | 25.130% | 251.30 |
| Peanut Flavor #SN960656 IFF | 0.170% | 1.70 |
| Vitamin/Mineral Premix | 0.110% | 1.10 |
| Dimodan® Visco-Lo | 0.700% | 7.00 |

(continued)

| | 50:50 Carbs/Palm Oil | |
|---|---|---|
| Ingredients | % | grams |
| | 100.000% | 1000.000 |

Example 8: 50:50 Carbohydrate(Powdered Sugar: CSS) Soybean Oil with 1% Emulsifier RUTF Formulation

A process substantially similar to the process of Example 6 was used to prepare the RUTF formulation detailed in Table 19.

Table 19 50:50 Carbohydrate (Powdered Sugar: CSS) Soybean Oil with 1% Emulsifier RUTF Formulation

| | 50:50 Carbs/Soybean Oil 1% Emulsifier | |
|---|---|---|
| Ingredients | % | grams |
| Powdered sugar, | 25.540% | 255.40 |
| Supro® 661 | 16.350% | 163.50 |
| Soybean Oil, Gateway | 31.600% | 316.00 |
| Palm Oil (Part. Hydrogenated) | - | - |
| Corn Syrup Solids 25DE, GPC | 25.230% | 252.30 |
| Peanut Flavor #SN960656 IFF | 0.170% | 1.70 |
| Vitamin/Mineral Premix | 0.110% | 1.10 |
| Dimodan® Visco-Lo | 1.000% | 10.00 |
| | 100.000% | 1000.000 |

Example 9: 50:50 Carbohydrate (Powdered Sugar: CSS) Palm Oil with No Emulsifier RUTF Formulation

A process substantially similar to the process of Example 6 was used to prepare the RUTF formulation detailed in Table 20, except an emulsifier and color was not included. The partially hydrogenated palm oil with the soybean oil was heated to 49°C (120°F) (above melting point of the palm oil used) so the fat would be in a fluid state.

Table 20 50:50 Carbohydrate (Powdered Sugar: CSS) Palm Oil with No Emulsifier RUTF Formulation

| | 50:50 Carbs/Palm Oil No Emulsifier | |
|---|---|---|
| Inqredients | % | grams |
| Powdered sugar, | 25.540% | 255.40 |
| Supro® 661 | 16.350% | 163.50 |
| Soybean Oil, Gateway | 16.300% | 163.00 |
| Palm Oil (Part. Hydrogenated) | 16.300% | 163.00 |
| Corn Syrup Solids 25DE, GPC | 25.230% | 252.30 |
| Peanut Flavor #SN960656 IFF | 0.170% | 1.70 |
| Vitamin/Mineral Premix | 0.110% | 1.10 |
| Emulsifier | -- | -- |
| | 100.000% | 1000.00 |

Example 10: 50:50 Carbohydrate (Powdered Sugar: CSS) 75:25 Soybean Oil: Palm Oil RUTF Formulation

A process substantially similar to the process of Example 6 was used to prepare the RUTF formulation detailed in Table 21, except an emulsifier was not included.

Table 21 50:50 Carbohydrate (Powdered Sugar: CSS) 75:25 Soybean Oil: Palm Oil RUTF Formulation

|  | 50:50 Carbs 75:25 Soybean Oil: Palm Oil | |
| --- | --- | --- |
| Ingredients | % | grams |
| Powdered sugar, | 25.500% | 255.00 |
| Supra® 661 | 16.700% | 167.00 |
| Soybean Oil, Gateway | 24.000% | 240.00 |
| Palm Oil (Part. Hydrogenated) | 8.000% | 80.00 |
| Corn Syrup Solids 25DE, GPC | 25.350% | 253.50 |
| Peanut, Nat. WONF #SN960656 IFF | 0.400% | 4.00 |
| Vitamin/Mineral Premix | 0.050% | 0.50 |
| Brown Lake Blend R #09195 | 25.500% | 255.00 |
|  | 100.000% | 1000.00 |

Example 11: 50:50 Carbohydrate (Powdered Sugar: CSS) 70:30 Soybean Oil: Palm Oil RUTF Formulation

A process substantially similar to the process of Example 6 was used to prepare the RUTF formulation detailed in Table 22, except an emulsifier was not included.

Table 22 50:50 Carbohydrate (Powdered Sugar: CSS) 70:30 Soybean Oil: Palm Oil RUTF Formulation

|  | 50:50 Carbs 70:30 Soybean Oil: Palm Oil | |
| --- | --- | --- |
| Ingredients | % | grams |
| Powdered sugar, | 25.500% | 255.00 |
| Supro® 661 | 16.700% | 167.00 |
| Soybean Oil, Gateway | 22.400% | 224.00 |
| Palm Oil (Part. Hydrogenated) | 9.600% | 96.00 |
| Corn Syrup Solids 25DE, GPC | 25.300% | 253.00 |
| Peanut, Nat. WONF #SN960656 IFF | 0.400% | 4.00 |
| Brown Lake Blend R #09195 | 0.100% | 1.00 |
|  | 100.000% | 1000.000 |

Example 12: 20:80 Carbohydrate (Powdered Sugar: CSS) 75:25 Soybean Oil: Palm Oil RUTF Formulation

A process substantially similar to the process of Example 6 was used to prepare the RUTF formulation detailed in Table 23, except an emulsifier was not included.

Table 23 20:80 Carbohydrate (Powdered Sugar: CSS) 75:25 Soybean Oil: Palm Oil RUTF Formulation

|  | 20:80 Carbs 75:25 Soybean Oil: Palm Oil | |
| --- | --- | --- |
| Ingredients | % | grams |
| Powdered sugar, | 10.050% | 100.50 |
| Supro® 661 | 16.700% | 167.00 |
| Soybean Oil, Gateway | 24.000% | 240.00 |
| Palm Oil (Part. Hydrogenated) | 8.000% | 80.00 |

(continued)

| | 20:80 Carbs 75:25 Soybean Oil: Palm Oil | |
|---|---|---|
| Ingredients | % | grams |
| Corn Syrup Solids 25DE, GPC | 40.700% | 407.00 |
| Peanut, Nat. WONF #SN960656 IFF | 0.500% | 5.00 |
| Brown Lake Blend R #09195 | 0.050% | 0.50 |
| | 100.000% | 1000.000 |

Example13: 20:80 Carbohydrate (Powdered Sugar: CSS) 70:30 Soybean Oil: Palm Oil RUTF Formulation

A process substantially similar to the process of Example 6 was used to prepare the RUTF formulation detailed in Table 24, except an emulsifier was not included.

Table 24 20:80 Carbohydrate (Powdered Sugar: CSS) 70:30 Soybean Oil: Palm Oil RUTF Formulation

| | 20:80 Carbs 70:30 Soybean Oil: Palm Oil | |
|---|---|---|
| Ingredients | % | grams |
| Powdered sugar, | 10.050% | 100.50 |
| Supro® 661 | 16.700% | 167.00 |
| Soybean Oil, Gateway | 22.400% | 224.00 |
| Palm Oil (Part. Hydrogenated) | 9.600% | 96.00 |
| Corn Syrup Solids 25DE, GPC | 40.700% | 407.00 |
| Peanut, Nat. WONF #SN960656 IFF | 0.500% | 5.00 |
| Brown Lake Blend R #09195 | 0.050% | 0.50 |
| | 100.000% | 1000.000 |

Example14: 25:75 Carbohydrate (Powdered Sugar: CSS) 70:30 Soybean Oil: Palm Oil RUTF Formulation

A process substantially similar to the process of Example 6 was used to prepare the RUTF formulation detailed in Table 25.

Table 25 25:75 Carbohydrate (Powdered Sugar: CSS) 70:30 Soybean Oil: Palm Oil RUTF Formulation

| | 25:75 Carbs 70:30 Soybean Oil: Palm Oil | |
|---|---|---|
| Ingredients | % | grams |
| Powdered sugar, | 12.700% | 127.00 |
| Supro® 661 | 16.700% | 167.00 |
| Soybean Oil | 22.400% | 224.00 |
| Palm Oil (Part. Hydrogenated) | 9.600% | 96.00 |
| Corn Syrup Solids 25DE | 37.265% | 372.65 |
| Peanut, Nat. WONF #SN960656 IFF | 0.500% | 5.00 |
| Brown Lake Blend R #09195 | 0.035% | 0.35 |
| Dimodan® Visco-Lo | 0.800% | 8.00 |
| | 100.000% | 1000.000 |

Example 15: 25:75 Carbohydrate (Powdered Sugar: CSS) All Soybean Oil RUTF Formulation

A process substantially similar to the process of Example 6 was used to prepare the RUTF formulation detailed in Table 26.

Table 26 25:75 Carbohydrate (Powdered Sugar: CSS) All Soybean Oil RUTF Formulation

|  | 25:75 Carbs All Soybean Oil | |
| --- | --- | --- |
| Ingredients | % | grams |
| Powdered sugar, | 12.700% | 127.00 |
| Supro® 661 | 16.700% | 167.00 |
| Soybean Oil | 32.000% | 320.00 |
| Palm Oil (Part. Hydrogenated) | | |
| Corn Syrup Solids 25DE | 37.265% | 372.65 |
| Peanut Flavor #SN960656 IFF | 0.500% | 5.00 |
| Brown Lake Blend R #09195 | 0.035% | 0.35 |
| Dimodan® Visco-Lo | 0.800% | 8.00 |
| | 100.000% | 1000.000 |

Example 16: Comparison of Stability and Texture of RUTF Formulation with and without Palm Oil

The following process was used to prepare the RUTF formulation detailed in Table 27. Peanut, Nat. WONF and Mono&Di, Dimodan® Visco-Lo were added to the oil and the oil mixture was heated to 43°C (110°F). Brown Lake Blend R #09195 was added to the oil mixture and the mixture was mixed for 3 minutes. Dry ingredients were added to the fat mixture in a paddle mixer. The mixture was blended on low speed until a batter or dough consistency was seen. The speed was increased to obtain high shear mixing for 15 minutes. The paddle mixer was set on the highest speed setting and was controlled using a variable speed transformer. Every 5 minutes the mixer was stopped and the sides of the container were scraped down. The sample was then transferred to a suitable container for storage.

Table 27 Comparison of Stability and Texture of RUTF Formulation with and without Palm Oil

| Ingredients | Soybean Oil/40% Palm Oil/75% CSS | | Soybean Oil/40% Palm Oil/54% CSS | | Soybean Oil/50% Palm Oil/75% CSS | | All Soybean Oil/54% CSS | |
|---|---|---|---|---|---|---|---|---|
| | % | grams | % | grams | % | grams | % | grams |
| Powdered sugar | 12.700% | 127.00 | 22.700% | 227.00 | 12.700% | 127.00 | 22.700% | 227.00 |
| Supro® 661 | 16.700% | 167.00 | 16.700% | 167.00 | 16.700% | 167.00 | 16.700% | 167.00 |
| Soybean Oil | 19.200% | 192.00 | 19.200% | 192.00 | 32.000% | 320.00 | 32.000% | 320.00 |
| Palm Oil (Part. Hydrogenated) | 12.800% | 128.00 | 12.800% | 128.00 | | | | |
| Corn Syrup Solids 10DE | 37.265% | 372.65 | 27.265% | 272.65 | 37.265% | 372.65 | 27.265% | 272.65 |
| Peanut, Nat. WONF #SN960656 IFF | 0.500% | 5.00 | 0.500% | 5.00 | 0.500% | 5.00 | 0.500% | 5.00 |
| Brown Lake Blend R #09195 | **0.035%** | **0.35** | **0.035%** | **0.35** | **0.035%** | **0.35** | **0.035%** | **0.35** |
| Vit/Min FT022094 (omitted for test) | -- | -- | -- | -- | -- | -- | -- | -- |
| Mono&Di, Dimodan® Visco-Lo | 0.800% | 8.00 | 0.800% | 8.00 | 0.800% | 8.00 | 0.800% | 8.00 |
| | 100.000% | 1000.000 | 100.000% | 1000.000 | 100.000% | 1000.000 | 100.000% | 1000.000 |

Example 17: Functional Food Paste Cheese Flavored Formulations Cheese Type 1 and Cheese Type 2

A process substantially similar to the process of Example 1 was used to prepare the formulations detailed in Table 28. The difference between the formulation process was that sodium stearoyl lactylate was substituted for the Dimodan® HS-KA (i.e., the emulsifying agent). Additionally one-half the water (100g) was heated to 66°C (150ºF) prior to adding the SSL with stirring to the heated water. The remaining ingredients were added to the paddle mixer and mixed slowly to blend. The aqueous SSL was added to the mix in the paddle mixture. The mixture was blended on low speed until a batter or dough consistency was obtained. The speed was then increased to high shear mixing for 15 minutes. The mixer was stopped every 5 minutes and the mixture was scraped from the sides of the container before mixing was continued. Tables 29 and 30 detail the nutrition profiles as would be required on "nutrition facts" labels for food by the United States Food and Drug Administration.

Table 28. Functional Food Paste Cheese Flavored Formulations

|  | Cheese Type 1 | | Cheese Type 2 | |
| --- | --- | --- | --- | --- |
| **Ingredients** | | | | |
|  | % | Grams | % | Grams |
| Water | 10.00 | 200.00 | 10.00 | 200.00 |
| Glycerine | 14.30 | 286.00 | 8.50 | 170.00 |
| Corn syrup solids, 20DE | 36.00 | 720.00 | 36.00 | 720.00 |
| Powdered sugar | 8.00 | 160.00 | 8.00 | 160.00 |
| Supro® 661 | 16.70 | 334.00 | 16.70 | 334.00 |
| Soybean Oil | 11.40 | 228.00 | 17.25 | 345.00 |
| Flour salt | 1.00 | 20.00 | 1.00 | 20.00 |
| Cheese powder, Berkshire NC cheese powder | 1.40 | 28.00 | 1.50 | 30.00 |
| Edlong Cheddar Cheese Flv. 2400 | 0.50 | 10.00 | 0.50 | 10.00 |
| Edlong Cheddar Cheese Flv. 1410368 | 0.20 | 4.00 | 0.25 | 5.00 |
| Grindsted SSL P 55 Veg | 0.50 | 10.00 | 0.30 | 6.00 |
| Total | 100.00 | 2000.00 | 100.00 | 2000.00 |

Table 29. Nutrition profile for Cheese Type 1

| **NUTRITION FACTS** | |
| --- | --- |
| Serving Size (100 g) Servings per Container | |
| Amount per Serving | |
| **Calories** 400 | Calories from Fat 110 |
| | % Daily Value |
| **Total Fat** 13g **20%** | |
| Saturated Fat 2g **10%** | |
| **Cholesterol** 0mg **0%** | |
| **Sodium** 660mg **28%** | |

(continued)

| NUTRITION FACTS | |
| --- | --- |
| Serving Size (100 g) Servings per Container | |
| **Total Carbohydrates** 57g **19%** | |
| Dietary Fiber 0g **0%** | |
| Sugars 11g | |
| **Protein** 15g | |
| Vitamin A 0% | Vitamin C 0% |
| Calcium 4% | Iron 15% |
| | |
| INGREDIENTS: Maltodextrein, Soy Protein Isolate, Glycerine, Soybean Oil, Water, Sugar, Flavoring Agents, Salt, and Sodium Stearoyl Lactylate. | |

Table 30. Nutrition profile for Cheese Type 2

| NUTRITION FACTS | |
| --- | --- |
| Serving Size (100 g) Servings per Container | |
| Amount per Serving | |
| **Calories** 430 170 | Calories from Fat |
| | % Daily Value |
| **Total Fat** 18g **28%** | |
| Saturated Fat 3g **14%** | |
| **Cholesterol** 0mg **0%** | |
| **Sodium** 660mg 27% | |
| **Total Carbohydrates** 51 g **17%** | |
| Dietary Fiber 0g **0%** | |
| Suqars 11g | |
| **Protein** 15g | |
| Vitamin A 0% | Vitamin C 0% |
| Calcium 4% | Iron 15% |
| | |
| INGREDIENTS: Maltodextrein, Soybean Oil, Soy Protein Isolate, Water, Glycerine, Sugar, Flavoring Agents, Salt, and Sodium Stearoyl Lactylate. | |

Example 18: RUTF Formulation Using Soy Protein Concentrate

100g of soybean oil was heated to 77°C (170°F) and Mono-and di, Dimodan® HS-K/A was added to the heated oil and mixed to form an oil mixture. The dry ingredients were added to the oil mixture in a paddle mixer and blended on low speed until a batter or dough consistency was seen. The speed was increased to high shear mixing for 15 minutes. (The paddle mixer was set on highest speed setting and controlled using a variable speed transformer). Every 5 minutes the mixer was stopped and the sides of the container were scraped down. The finished RUTF was transferred to a suitable container for storage.

Table 31. RUTF Formulation Using Soy Protein Concentrate

|  | Procon® 2000 | |
| --- | --- | --- |
| Ingredients | % | Grams |
| Powdered sugar | 44.890% | 448.90 |
| Procon® 2000 | 21.000% | 210.00 |
| Soybean Oil | 32.000% | 320.00 |
| Corn Syrup Solids 25DE | 1.230% | 12.30 |
| Peanut butter flavor #SN038750 IFF | 0.170% | 1.70 |
| Vit/Min FT022094 | 0.110% | 1.10 |
| Mono-and di, Dimodan® HS-K/A | 0.600% | 6.000 |
|  | 100.000% | 1000.000 |

When introducing elements of the present invention or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

**Claims**

1. A food composition comprising carbohydrate, from 10 wt.% to 40 wt.% fat based on the total weight of the composition, and at least about 15 wt.% soy protein based on the total weight of the composition and a water activity of less than about 0.85 $a_w$ when measured at 25°C.

2. The food composition of claim 1 further having a moisture content of greater than 10 wt.% based on the total weight of the composition.

3. The food composition of claim 1 further comprising at least about 3 wt.% humectant based on the total weight of the composition.

4. The food composition of claim 1 wherein the shelf-life at 25°C is selected from the group consisting of at least 6 months, at least 12 months, or at least 24 months.

5. The food composition of claim 1 further comprising a protein selected from the group consisting of a dairy protein, a wheat protein, a canola protein, a corn protein, a lupin protein, an oat protein, a pea protein, a rice protein, a sorghum protein, an amaranth protein, an arrowroot protein, a barley protein, a buckwheat protein, a cassava protein, a channa protein, a millet protein, a peanut protein, a potato protein, a rye protein, a sunflower protein, a tapioca protein, a triticale protein, a whey protein, an egg protein, a white kidney bean protein, a bamboo extract protein, a meat protein, a fish protein, or combinations thereof.

6. The food composition of claim 1 wherein the soy protein is selected from the group consisting of isolated soy protein, soy protein concentrate, soy flour, or combinations thereof.

7. The food composition of claim 1 wherein the fat is selected from the group consisting of palm oil, coconut oil, rapeseed oil, sunflower oil, peanut oil, cottonseed oil, palm kernel oil, olive oil, corn oil, hazelnut oil, linseed oil, rice bran oil, sesame oil, safflower oil, canola oil, flax seed oil, soybean oil, blubber, cod liver oil, lard pork fat, beef tallow, chicken fat, or combinations thereof.

8. The food composition of claim 1 wherein the fat is partially hydrogenated or hydrogenated.

9. The food composition of claim 1 wherein the fat is selected from the group consisting of soybean oil, palm oil, or combinations thereof.

10. The food composition of claim 1 wherein the carbohydrate is cane sugar, a maltodextrin, a rye carbohydrate, a barley carbohydrate, a corn carbohydrate, a cassava carbohydrate, an oat carbohydrate, a rice carbohydrate, or a combination thereof.

11. The food composition of claim 2 wherein the humectant is glycerine, maltitol, sorbitol, or a combination thereof.

12. A food product comprising the food composition of claim 1 wherein the food product is selected from the group consisting of a functional food paste, a bar, a chew, a confection, a filling, a ready-to-use therapeutic food, a ready-to-use supplemental food, a nutritional gel, an endurance gel, a combination snack, a meals ready-to-eat, or combinations thereof.

13. The food product of claim 12 wherein the food composition reduces the migration of moisture between components of the food product having differing moisture contents.

## Patentansprüche

1. Lebensmittelzusammensetzung, die ein Kohlenhydrat, 10 Gew.-% bis 40 Gew.-% Fett unter Bezugnahme auf das Gesamtgewicht der Zusammensetzung und mindestens ungefähr 15 Gew.-% Sojaprotein unter Bezugnahme auf das Gesamtgewicht der Zusammensetzung umfasst, wobei ihre Wasseraktivität bei einer Messung bei 25 °C weniger als ungefähr 0,85 $a_w$ beträgt.

2. Lebensmittelzusammensetzung nach Anspruch 1, wobei diese weiterhin einen Feuchtigkeitsgehalt von mehr als 10 Gew.-% unter Bezugnahme auf das Gesamtgewicht der Zusammensetzung aufweist.

3. Lebensmittelzusammensetzung nach Anspruch 1, wobei diese weiterhin mindestens ungefähr 3 Gew.-% Feuchthaltemittel unter Bezugnahme auf das Gesamtgewicht der Zusammensetzung aufweist.

4. Lebensmittelzusammensetzung nach Anspruch 1, wobei die Lagerfähigkeit bei 25 °C aus der Gruppe ausgewählt ist, die aus mindestens 6 Monaten, mindestens 12 Monaten oder mindestens 24 Monaten besteht.

5. Lebensmittelzusammensetzung nach Anspruch 1, wobei diese weiterhin ein Protein umfasst, das aus der Gruppe ausgewählt ist, welche aus einem Milchprotein, einem Weizenprotein, einem Rapsprotein, einem Maisprotein, einem Lupinenprotein, einem Haferprotein, einem Erbsenprotein, einem Reisprotein, einem Sorghumhirsenprotein, einem Amarantprotein, einem Pfeilwurzprotein, einem Gerstenprotein, einem Buchweizenprotein, einem Maniokprotein, einem Kichererbsenprotein, einem Millethirsenprotein, einem Erdnussprotein, einem Kartoffelprotein, einem Roggenprotein, einem Sonnenblumenprotein, einem Tapiokaprotein, einem Triticaleprotein, einem Molkenprotein, einem Eiprotein, einem Protein der weißen Kidneybohne, einem Bambusextraktprotein, einem Fleischprotein, einem Fischprotein oder Kombinationen davon besteht.

6. Lebensmittelzusammensetzung nach Anspruch 1, wobei das Sojaprotein aus der Gruppe ausgewählt ist, die aus isoliertem Sojaprotein, Sojaproteinkonzentrat, Sojamehl oder Kombinationen davon besteht.

7. Lebensmittelzusammensetzung nach Anspruch 1, wobei das Fett aus der Gruppe ausgewählt ist, die aus Palmöl, Kokosfett, Rapsöl, Sonnenblumenöl, Erdnussöl, Baumwollsaatöl, Palmkernöl, Olivenöl, Maiskeimöl, Haselnussöl, Leinöl, Reiskeimöl, Sesamöl, Distelöl, Canola-Öl, Faserleinöl, Sojaöl, Wal- und Robbenspeck, Kabeljau-Lebertran, Schweineschmalz, Rindertalg, Hühnerfett oder Kombinationen davon besteht.

8. Lebensmittelzusammensetzung nach Anspruch 1, wobei das Fett teilweise gehärtet oder gehärtet ist.

9. Lebensmittelzusammensetzung nach Anspruch 1, wobei das Fett aus der Gruppe ausgewählt ist, die aus Sojaöl, Palmöl oder Kombinationen davon besteht.

10. Lebensmittelzusammensetzung nach Anspruch 1, wobei es sich bei dem Kohlenhydrat um Rohrzucker, ein Maltodextrin, ein Roggenkohlenhydrat, ein Gerstenkohlenhydrat, ein Maiskohlenhydrat, ein Maniokkohlenhydrat, ein Haferkohlenhydrat, ein Reiskohlenhydrat oder eine Kombination davon handelt.

11. Lebensmittelzusammensetzung nach Anspruch 2, wobei es sich bei dem Feuchthaltemittel um Glycerin, Maltit, Sorbit oder eine Kombination davon handelt.

12. Lebensmittelerzeugnis, welches die Lebensmittelzusammensetzung nach Anspruch 1 enthält, wobei das Lebensmittelerzeugnis aus der Gruppe ausgewählt ist, die aus einem pastösen funktionellen Lebensmittel, einem Riegel, einem Kauprodukt, einer Süßware, einer Füllung, einem verzehrfertigen therapeutischen Lebensmittel, einem verzehrfertigen Nahrungsergänzungsmittel, einem Nährstoffgel, einem Gel zur Steigerung der Ausdauerleistung, einem kombinierten Snack, einem Fertiggericht oder Kombinationen davon besteht.

13. Lebensmittelerzeugnis nach Anspruch 12, wobei die Lebensmittelzusammensetzung die Migration von Feuchtigkeit zwischen Bestandteilen des Lebensmittelerzeugnisses verringert, welche unterschiedliche Feuchtigkeitsgehalte aufweisen.


**Revendications**

1. Composition alimentaire comprenant un glucide, de 10 % en poids à 40 % en poids de matière grasse sur la base du poids total de la composition, et au moins environ 15 % en poids de protéine de soja sur la base du poids total de la composition et une activité de l'eau inférieure à environ 0,85 $a_w$ lorsqu'elle est mesurée à 25 °C.

2. Composition alimentaire de la revendication 1 ayant en outre une teneur en humidité supérieure à 10 % en poids sur la base du poids total de la composition.

3. Composition alimentaire de la revendication 1 comprenant en outre au moins environ 3 % en poids d'humectant sur la base du poids total de la composition.

4. Composition alimentaire de la revendication 1 **caractérisée en ce que** la durée de conservation à 25 °C est choisie dans le groupe constitué d'au moins 6 mois, au moins 12 mois, ou au moins 24 mois.

5. Composition alimentaire de la revendication 1 comprenant en outre une protéine choisie dans le groupe constitué d'une protéine laitière, une protéine de blé, une protéine de canola, une protéine de maïs, une protéine de lupin, une protéine d'avoine, une protéine de pois, une protéine de riz, une protéine de sorgho, une protéine d'amarante, une protéine de marante, une protéine d'orge, une protéine de sarrasin, une protéine de manioc, une protéine de pois chiche, une protéine de millet, une protéine d'arachide, une protéine de pomme de terre, une protéine de seigle, une protéine de tournesol, une protéine de tapioca, une protéine de triticale, une protéine de lactosérum, une protéine d'oeuf, une protéine d'haricot blanc, une protéine d'extrait de bambou, une protéine de viande, une protéine de poisson, ou des combinaisons de celles-ci.

6. Composition alimentaire de la revendication 1 dans laquelle la protéine de soja est choisie dans le groupe constitué de protéine de soja isolée, concentré de protéine de soja, farine de soja, ou des combinaisons de ceux-ci.

7. Composition alimentaire de la revendication 1 dans laquelle la matière grasse est choisie dans le groupe constitué de l'huile de palme, l'huile de noix de coco, l'huile de colza, l'huile de tournesol, l'huile d'arachide, l'huile de coton, l'huile de palmiste, l'huile d'olive, l'huile de maïs, l'huile de noisette, l'huile de lin, l'huile de son de riz, l'huile de sésame, l'huile de carthame, l'huile de canola, l'huile de lin, la graisse de poisson, l'huile de foie de morue, le lard de porc, le suif de boeuf, la graisse de poulet, ou des combinaisons de ceux-ci.

8. Composition alimentaire de la revendication 1 dans laquelle la matière grasse est partiellement hydrogénée ou hydrogénée.

9. Composition alimentaire de la revendication 1 dans laquelle la matière grasse est choisie dans le groupe constitué de l'huile de soja, l'huile de palme, ou des combinaisons de celles-ci.

10. Composition alimentaire de la revendication 1 dans laquelle le glucide est la canne à sucre, une maltodextrine, un glucide de seigle, un glucide d'orge, un glucide de maïs, un glucide de manioc, un glucide d'avoine, un glucide de riz, ou une combinaison de ceux-ci.

11. Composition alimentaire de la revendication 2 dans laquelle l'humectant est la glycérine, le maltitol, le sorbitol, ou une combinaison de ceux-ci.

12. Produit alimentaire comprenant la composition alimentaire de la revendication 1 **caractérisé en ce que** le produit alimentaire est choisi dans le groupe constitué d'une pâte alimentaire fonctionnelle, une barre, une gomme à mâcher, une confiserie, une garniture, un aliment thérapeutique prêt à l'usage, un supplément alimentaire prêt à l'usage, un gel nutritionnel, un gel d'endurance, un en-cas combiné, un plat préparé, ou des combinaisons de ceux-ci.

13. Produit alimentaire de la revendication 12 dans lequel la composition alimentaire réduit la migration d'humidité entre les composants du produit alimentaire ayant différentes teneurs en humidité.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6726943 B2
- US 6716462 B2
- US 2007104853 A1
- US 4152462 A

### Non-patent literature cited in the description

- **NORMAN N. POTTER.** Food Science. A.V.I, 1978, 314-316
- Protein Quality Evaluation, Food and Nutrition Paper 51. FAO/W HO, 1991, 35